# EUROPEAN PATENT SPECIFICATION

(11) **EP 0 509 720 B1**
(45) Date of publication and mention of the grant of the patent: **24.04.1996**
(21) Application number: 92303213.0
(22) Date of filing: 10.04.1992
(51) Int. Cl.: G06F 12/06

(54) **Peripheral device address control system**
Adresssteuerungsanordnung von Peripheriegeräten
Système de commande d'adresse de dispositifs périphériques

(30) Priority: 15.04.1991 US 685119
(43) Date of publication of application: 21.10.1992
(73) Proprietor: NCR INTERNATIONAL INC., Dayton, Ohio 45479 (US)
(72) Inventor: Isenberg, W. David, Fort Collins, CO 80526 (US)
(74) Representative: Robinson, Robert George

(56) References cited:
- DE-A- 2 932 868
- US-A- 4 373 181
- US-A- 4 964 038

## Description

This invention relates to computer systems of the kind including processor means coupled to an address bus and a data bus, and peripheral device control means coupled to said address bus and including an address register.

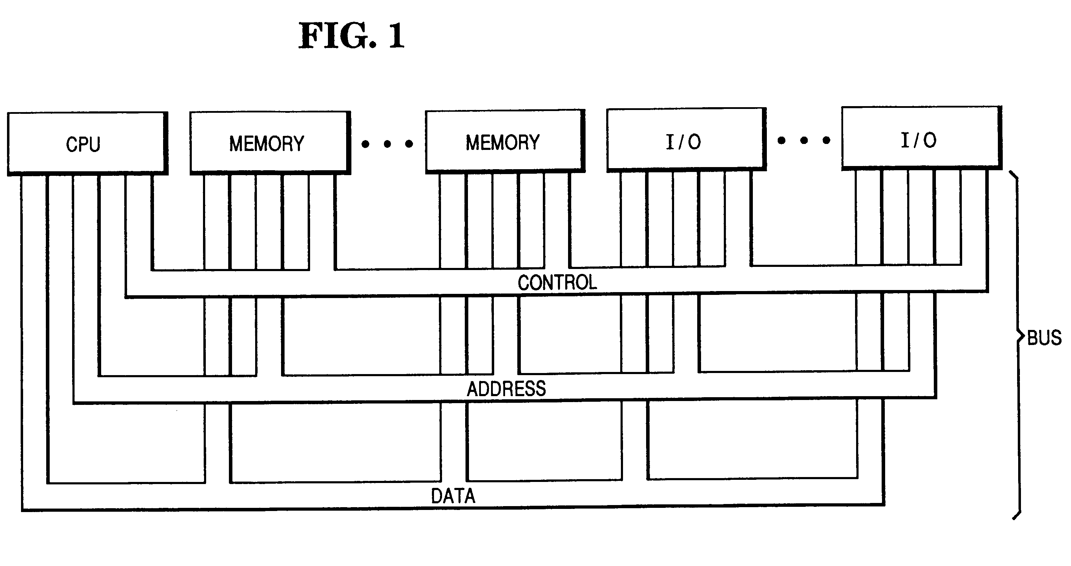

Figure 1 is a simplified diagram of a computer system. An address bus carries a multi-bit address word, generally provided by the processor (CPU). The address bus connects to other devices, such as memory and input/output (I/O) devices (such as disc drives), which constantly "listen" to the address bus. When one of the devices "hears" its own address, it responds in an appropriate manner.

In general, the user of the computer will wish to install additional devices, which also connect to the address bus, and which are made by parties other than the maker of the computer. In order to accommodate this installation, the computer maker generally sets aside a range of empty addresses for the later-installed devices. However, sometimes the device makers assign the same address to different devices, which causes a conflict if the different devices are installed in the same computer.

One solution to the conflict is to allow the user, instead of the third party manufacturer, to select the address, as by setting switches in a DIP switch. This solution has the disadvantage that not all people are familiar with operation of DIP switches, nor with the binary number which the settings of the DIP switch represent, and can incorrectly set the switches. In addition, if other DIP switches are present on the device, the user can accidentally set the wrong switches.

US-A-4 373 181 discloses a dynamic address assignment system for a data processing system which alleviates the problems associated with such use of DIP switches. According to this known system an address bus carries command signals as well as address signals, and, in response to a load address command, the presented address is loaded into the address register of a peripheral control device selected in accordance with a control signal on a control unit select line. This control signal is derived from signals provided on the system data bus.

This US patent describes two techniques for selecting a particular peripheral so that an address can be loaded into it. The first is for the peripherals to have select lines connected to the data bus, each peripheral having its select line connected to a different one of the (16) lines of the data bus; the CPU selects the desired peripheral by putting a 1 onto that line of the data bus and Os on all the other lines of the data bus. (In effect, this results in the peripherals being selected by means of a 1-out-of-16 coded word on the data bus.) The second technique is to have a separate selector unit, which decodes a binary word on the data bus to select the desired peripheral.

The loading of addresses into the peripherals is controlled by various signals on the system bus (which can be taken as comprising an address bus, a data bus, and a control bus). It is obviously important that these addresses should only be loaded when desired, and that they should not be liable to false loading at other times. However, the system bus is used for virtually all the operations of the system. There is therefore a danger that the signals appearing on this bus during normal operation will accidentally cause a (false) setting of an address into a peripheral.

One possible way of solving this problem is to control the nature of the signals on the system bus. Whether this can be done, and how easy it is, depends on many different circumstances. It may not be too difficult to control the signals coming from the CPU. But in many systems, the CPU is not the sole source of signals on the system bus. Other units, such as communication units (peripheral units), may also need to use the system bus.

The main object of the present invention is to provide an improved technique for alleviating this problem.

Accordingly, the present invention provides a computer system as set forth in claim 1.

The loading of an address in a peripheral thus requires the cycles. peripheral to match two separate addresses on successive cycles. The possibility of false loading is thus reduced to a negligible value.

An alternative solution to the problem is described in DB-A-2 932 868. In this system, the peripherals are connected in a "daisy-chain" arrangement, with each being coupled to the next by a respective enable line (the first enable line coupling the CPU to the first peripheral). This sequence of dedicated enable lines allows the peripherals to be selected in sequence for loading their addresses, and the problem of possible false loading from the sequence for loading from the system bus does not arise. However, this technique has disadvantages. It may not be convenient to provide a daisy-chain connection between the peripherals,. Also, the CPU cannot identify the peripherals in an absolute sense; it can only identify them by means of their position in the chain, so that it may be necessary to identify the peripherals manually to the CPU.

One embodiment of the present invention will now be described by way of example, with reference to the accompanying drawings, in which:-
Figure 1 is a simplified schematic drawing of a computer system, and
Figure 2 illustrates an address assignment control system in accordance with the present invention.

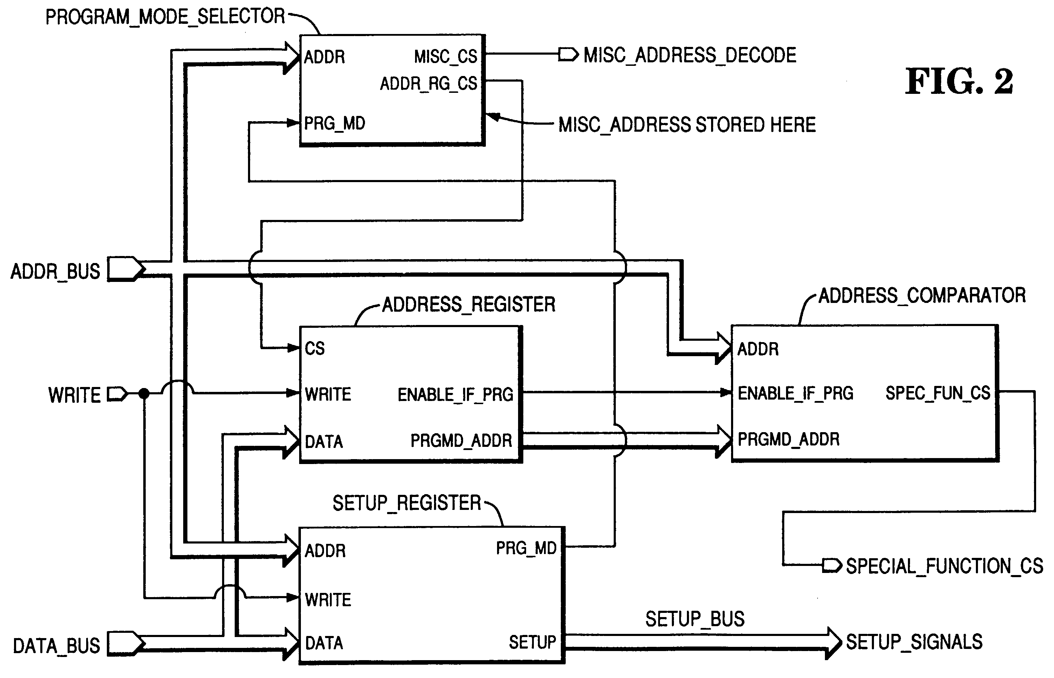

Referring to Figure 2, the following sequence of events is undertaken for assigning an address to a device whose address is to be programmed. For simplicity, the device will be assumed to be a controller for a disc drive.

First, the address of the SETUP_REGISTER is placed onto the ADDRESS_BUS, and a specific data word is written onto the DATA_BUS, and thus into the SETUP_REGISTER. The word is specific in that it contains zeros in the fifth and seventh bit positions (i.e., the word is OXOX XXXX, wherein "X" indicates that the digit in the X's position can be either ZERO or ONE and "0" indicates, of course, that the digit is ZERO).

The SETUP_REGISTER responds to this specific word by actuating the PROGRAM_MODE line in response. This actuation ultimately allows the ADDRESS_REGISTER to receive data, by way of the following sequence: when PROGRAM_MODE_SELECTOR now receives the proper address on the ADDRESS_BUS, PROGRAM_MODE_SELECTOR applies a signal to the line ADDR_RG_CS (an abbreviation for "address register chip select"), which connects to the chip select (CS) line of the ADDRESS_REGISTER. The signal on line CS enables ADDRESS_REGISTER to accept data.

That is, the "enablement" of ADDRESS_REGISTER for receiving data is actually a two-step process: first, PROGRAM_MODE_SELECTOR is actuated into "program mode," and, after this actuation, receipt of the proper address by PROGRAM_MODE_SELECTOR enables the ADDRESS_REGISTER.

When in "program mode," PROGRAM_MODE_SELECTOR suspends its normal operation. In normal operation, the PROGRAM_MODE_SELECTOR inquires whether the data word present on the ADDRESS_BUS is identical to a specific address, namely, that termed MISC_ADDRESS in the Figure. If so, PROGRAM_MODE_SELECTOR actuates the line MISC_ADDRESS_DECODE, which leads to a second device to be enabled (which is distinct from the drive controller in question). During "program mode," however, MISC_ADDRESS_DECODE is constrained to remain de-actuated, and the second device remains disabled.

At this time, while the ADDRESS_REGISTER is enabled, the ADDRESS_REGISTER accepts and stores data from the DATA BUS, which is the system data bus in the computer. This data is the address assigned to the controller. The ADDRESS_REGISTER presents this data on the bus labeled PRGMD_ADDR (an abbreviation for "programmed address.")

After being loaded, the ADDRESS_REGISTER also produces a signal on the line ENABLE_IF_PROGRAMMED, which indicates to the ADDRESS_COMPARATOR that the ADDRESS_REGISTER contains data. If the ENABLE_IF_PROGRAMMED line produces no signal, then the ADDRESS_COMPARATOR does not perform the comparison operation (later described) because no address for the device is present.

The following points of the preceding procedure are emphasized.

**One.** The ADDRESS_REGISTER is not addressed directly by the ADDRESS BUS, as is, for example, the SETUP_REGISTER. Instead, the following sequence of data movements is used to enable the ADDRESS_REGISTER for accepting data:
1. The SETUP_REGISTER block is addressed (and, of course, write-enabled).
2. The specific word OXOX XXXX is written to the SETUP_REGISTER (which actuates line PROGRAM_MODE).
3. The block PROGRAM_MODE_SELECTOR is addressed, which actuates line ADDR_RG_CS, because the line PROGRAM_MODE is actuated.

That is, the sequence of (a) a predetermined address-write, (b) a predetermined data-write, and (c) a second predetermined address-write enables the ADDRESS_REGISTER. In a sense, the "address" of ADDRESS_REGISTER is that of block PROGRAM_MODE_SELECTOR, when in "program mode."

**Two.** After the data is written to ADDRESS_REGISTER, the specific word OXOX XXXX is removed from the SETUP_REGISTER, restoring normal functioning of the SETUP_REGISTER.

During operation of the computer, the ADDRESS COMPARATOR continually compares the address carried by the ADDRESS_BUS with that on PRGMD_ADDR (at the proper periodic time intervals, as dictated by the system clock). When the two addresses match, the ADDRESS COMPARATOR actuates the line SPEC_FUN_CS (an abbreviation for "special function chip select,") thereby actuating the controller in the present example.

When the word OXOX XXXX is absent from the DATA_BUS, as is the case during normal operation, the SETUP_REGISTER is used as a register for holding information to be sent to peripheral devices during set-up operations, as known in the art, and as indicated by the signal lines in the SETUP_BUS. Further, this absence of the word OXOX XXXX causes line PROGRAM_MODE to be inactive, and thus the Chip Select line (abbreviated CS) prevents data from being written to the ADDRESS_REGISTER block.

The implementation of the diagram given in Figure 2 is straightforward, as by representing each block (such as the SETUP_REGISTER) by a truth table. Implementation of truth tables in hardware is known in the art. Further, numerous different implementations are possible.

The device which is enabled by SPECIAL_FUNCTION_CS can be of several types. It can be of the type known as an "expansion card" as that term applies to the expansion slots in a Personal Computer. Alternately, the device can be circuitry located on the main system board, and need not be detachable.

More generally, the device can be any special function which needs an address in address space. Further, the apparatus of Figure 2, which enables the device, can be contained on the main system board, and yet the special function (which is enabled by the apparatus) need not even be present at the time of manufacture of the main system board. That is, the main system board is equipped with the apparatus of Figure 2, but possibly not with the device which the apparatus is to enable, in anticipation of the later addition of the device. Still further, several apparatus of the type of Figure 2 can be used. In this case, for each, a separate register of the "SETUP_REGISTER" type should be provided, each with a different address [e.g., 93, 94, 95 (hex), etc.]

In Figure 2, the ADDRESS_COMPARATOR produces the SPECIAL_FUNCTION_CS signal when the address on the ADDRESS BUS matches that held by the ADDRESS_REGISTER. One type of match occurs when the two addresses are identical. However, other types of match can be envisioned, as when the two addresses differ by one.

That is, the concept of "matching" involves actuation of the SPECIAL_FUNCTION_CS signal in response to placement of a known address on the ADDRESS_BUS. It is not necessary that this address match that in the ADDRESS_REGISTER bit-for-bit, although such matching is perhaps simplest to understand and implement. Instead, it is important that the user know what particular address word will cause the actuation. The ADDRESS_COMPARATOR enables the line SPECIAL_FUNCTION_CS when that address word appears.

Some of the blocks in Figure 2, such as PROGRAM_MODE_SELECTOR, can be said to "reside" at an address in memory, because that address must be present on the ADDRESS_BUS in order to instruct the block to execute an intended function.

The described embodiment has a particular advantage in that, where devices other than the CPU may have control of the address and data buses, inadvertent device address writing is prevented by virtue of the described multi-step address writing procedure.

## Claims

1. A computer system, including processor means (CPU) coupled to an address bus (ADDR BUS) and a data bus (DATA BUS), and peripheral device control means coupled to said address bus (ADDR BUS) and including an address register (ADDRESS REGISTER) and addressable selector means (PROGRAM MODE SELECTOR), characterized in that said peripheral device control means includes addressable register means (SET UP REGISTER) coupled to said address bus (ADDR BUS) and to said data bus (DATA BUS) and adapted, in response to address signals on said address bus (ADDR BUS) identifying said addressable register means (SET UP REGISTER), and to the presentation of data signals on said data bus (DATA BUS) representing a predetermined data word to provide a first control signal (PRG MD); in that said addressable selector means (PROGRAM MODE SELECTOR) are coupled to said address bus (ADDR BUS) and are adapted to receive said first control signal (PRG MD), and in response to said first control signal (PRG MD) and predetermined address signals on said address bus (ADDR BUS) to provide a second control signal (ADDR REG CS); and in that said address register (ADDRESS REGISTER) is coupled to said data bus and in response to said second control signal (ADDR REG CS) is adapted to store data on said data bus (DATA BUS) representing a device address for a peripheral device coupled to said peripheral device control means.

2. A computer system according to claim 1, characterized in that said addressable selector means (PROGRAM MODE SELECTOR) is adapted in the presence of said predetermined address signals on said address bus (ADDR BUS), and the absence of said first control signal (PRG MD), to provide an enabling signal (MISC CS) for a further device.

3. A computer system according to claim 1 or claim 2, characterized in that said addressable register means (SET UP REGISTER) is adapted, in the presence of said identifying address signals on said address bus (ADDR BUS), to provide data signals (SETUP) present on said data bus (DATA BUS), other than data signals representing said predetermined data word, to said peripheral device during set-up operations.

4. A computer system according to any previous claim, characterized in that said peripheral device control means includes address comparator means (ADDRESS COMPARATOR) coupled to said address bus (ADDR BUS) and to said address register (ADDRESS REGISTER) and adapted, in response to a third control signal provided by said address register (ADDRESS REGISTER) when an address is stored therein, to compare addresses provided on said address bus (ADDR BUS) with the address stored in said address register (ADDRESS REGISTER).

5. A computer system according to any previous claim, characterized in that a plurality of said peripheral device control means are provided, responsive to respective first control signals (PRGMD), to store a respective device address provided on said data bus (DATA BUS).

## Patentansprüche

1. Ein Computersystem, das eine Prozessoreinrichtung (CPU), die mit einem Adreßbus (ADR_BUS) und einem Datenbus (DATEN_BUS) gekoppelt ist, und eine Peripherieeinrichtungs-Steuereinrichtung umfaßt, die mit dem Adreßbus (ADR_BUS) gekoppelt ist, und die ein Adreßregister (ADRESS_ REGISTER) und adressierbare Auswahleinrichtungen (PROGRAMM_ BETRIEBSART_WÄHLER) umfaßt, dadurch gekennzeichnet, daß die Peripherieeinrichtungs-Steuereinrichtung eine adressierbare Registereinrichtung (SETUP_REGISTER) umfaßt, die mit dem Adreßbus (ADR_BUS) und dem Datenbus (DATEN_BUS) gekoppelt ist und ausgelegt ist, in Erwiderung auf Adreßsignale auf dem Adreßbus (ADR_BUS), die die adressierbare Register-einrichtung (SETUP_REGISTER) identifizieren, und auf das Vorliegen von Datensignalen auf dem Datenbus (DATEN_BUS), die ein vorbestimmtes Datenwort darstellen, ein erstes Steuersignal (PRG_MD) vorzusehen; daß die adressierbaren Auswahleinrichtungen (PROGRAMM_BETRIEBSART_WÄHLER) mit dem Adreßbus (ADR_BUS) gekoppelt sind und ausgelegt sind, das erste Steuersignal (PRG_MD) zu empfangen und in Erwiderung auf das erste Steuersignal (PRG_MD) und vorbestimmte Adreßsignale auf dem Adreßbus (ADR_BUS) ein zweites Steuersignal (ADR_RG_CS) vorzusehen; und daß das Adreßregister (ADRESS_REGISTER) mit dem Datenbus gekoppelt ist und ausgelegt ist, in Erwiderung auf das zweite Steuersignal (ADR_RG_CS) Daten auf dem Datenbus (DATEN_BUS) abzuspeichern, die eine Einrichtungsadresse für eine Peripherieeinrichtung darstellen, die mit der Peripherieeinrichtungs-Steuereinrichtung gekoppelt ist.

2. Ein Computersystem nach Anspruch 1, dadurch gekennzeichnet, daß die adressierbare Auswahleinrichtung (PROGRAMM_BETRIEBSART_WÄHLER) beim Vorliegen der vorbestimmten Adreßsignale auf dem Adreßbus (ADR_BUS) und dem Fehlen des ersten Steuersignals (PRG_MD) ein Freigabesignal (MISC_CS) für eine weitere Einrichtung vorsieht.

3. Ein Computersystem nach Anspruch 1 oder Anspruch 2, dadurch gekennzeichnet, daß die adressierbare Registereinrichtung (SETUP_REGISTER) beim Vorliegen der identifizierenden Adreßsignale auf dem Adreßbus (ADR_BUS) während des Einrichtungsbetriebs für die Peripherie-einrichtung Datensignale (SETUP) vorsieht, die auf dem Datenbus (DATEN_BUS) vorliegen, und zwar andere als die Datensignale, die das vorbestimmte Datenwort darstellen.

4. Ein Computersystem nach einem vorhergehenden Anspruch, dadurch gekennzeichnet, daß die Peripherieeinrichtungs-Steuereinrichtung eine Adreßvergleichereinrichtung (ADRESS_VERGLEICHER) umfaßt, die mit dem Adreßbus (ADR_BUS) und dem Adreßregister (ADRESS_REGISTER) gekoppelt ist und in Erwiderung auf ein drittes Steuersignal, das durch das Adreßregister (ADRESS_REGISTER) vorgesehen wird, wenn eine Adresse darin gespeichert wird, Adressen, die auf dem Adreßbus (ADR_BUS) vorgesehen werden, mit der Adresse vergleicht, die in dem Adreßregister (ADRESS_REGISTER) abgespeichert ist.

5. Ein Computersystem nach einem vorhergehenden Anspruch, dadurch gekennzeichnet, daß eine Vielzahl von den Peripherieeinrichtungs-Steuereinrichtungen vorgesehen ist, die auf antsprechende erste Steuersignale (PRG_MD) ansprechen, um eine entsprechende Einrichtungsadresse abzuspeichern, die auf dem Datenbus (DATEN_BUS) vorgesehen wird.

## Revendications

1. Un système informatique, comportant un moyen processeur (unité centrale) accouplé à un bus d'adresse (ADDR BUS) et un bus de données (DATA BUS), et un moyen de contrôle de dispositif périphérique accouplé audit bus d'adresse (ADDR BUS) et comportant un registre d'adresse (ADDRESS REGISTER), et un moyen de sélection adressable (PROGRAM MODE SELECTOR) caractérisé en ce que ledit moyen de contrôle de dispositif périphérique comporte un moyen registre adressable (SETUP REGISTER) accouplé audit bus d'adresse (ADDR BUS) et audit bus de données (DATA BUS) et adapté, en réponse à des signaux d'adresse sur ledit bus d'adresse (ADDR BUS) identifiant ledit moyen registre adressable (SETUP REGISTER), et à la présentation de signaux de données sur ledit bus de données (DATA BUS) représentant un mot de données prédéterminé, pour fournir un premier signal de contrôle (PRG MD); en ce que ledit moyen de sélection adressable (PROGRAM MODE SELECTOR) est accouplé audit bus d'adresse (ADDR BUS) et est adapté pour recevoir ledit premier signal de contrôle (PRG MD), et en réponse audit premier signal de contrôle (PRG MD) et auxdits signaux d'adresse prédéterminés sur ledit bus d'adresse (ADDR BUS) pour fournir un deuxième signal de contrôle (ADDR REG CS); et en ce que ledit registre d'adresse (ADDRESS REGISTER) est accouplé audit bus de données et en réponse audit deuxième signal de contrôle (ADDR REG CS) est adapté pour mémoriser des données sur ledit bus de données (DATA BUS) représentant une adresse dispositif pour un dispositif périphérique accouplé audit moyen de contrôle de dispositif périphérique.

2. Un système informatique conformément à la revendication 1, caractérisé en ce que ledit moyen de sélection adressable (PROGRAM MODE SELECTOR) est adapté en présence desdits signaux d'adresse prédéterminés sur ledit bus d'adresse (ADDR BUS), et en l'absence dudit premier signal de contrôle (PRG MD), pour fournir un signal de libération (MISC CS) pour un autre dispositif.

3. Un système informatique conformément à la revendication 1 ou à la revendication 2, caractérisé en ce que ledit moyen registre adressable (SETUP REGISTER) est adapté, en présence desdits signaux d'adresse d'identification sur ledit bus d'adresse (ADDR BUS), pour fournir des signaux de données (SETUP) présents sur ledit bus de données (DATA BUS), autres que les signaux de données représentant ledit mot de données prédéterminé, audit dispositif périphérique pendant les opérations de préparation.

4. Un système informatique conformément à toute revendication précédente, caractérisé en ce que ledit moyen de contrôle de dispositif périphérique comporte un moyen comparateur d'adresse (ADDRESS COMPARATOR) accouplé audit bus d'adresse (ADDR BUS) et audit registre d'adresse (ADDRESS REGISTER) et adapté, en réponse à un troisième signal de contrôle fourni par ledit registre d'adresse (ADDRESS REGISTER) quand une adresse y est mémorisée, pour comparer les adresses fournies sur ledit bus d'adresse (ADDR BUS), à l'adresse mémorisée dans ledit registre d'adresse (ADDRESS REGISTER).

5. Un système informatique conformément à toute revendication précédente, caractérisé en ce qu'une pluralité desdits moyens de contrôle de dispositif périphérique est fournie, réagissant aux premiers signaux de contrôle respectifs (PRG MD), pour mémoriser une adresse -de dispositif respective fournie sur ledit bus de données (DATA BUS).
